# FASCICULE DE BREVET EUROPEEN

(11) **EP 3 396 102 B1**
(45) Date de publication et mention de la délivrance du brevet: **11.09.2019**
(21) Numéro de dépôt: 18168667.6
(22) Date de dépôt: 23.04.2018
(51) Int. Cl.: E06B 9/76, E06B 9/17, F16B 37/02

(54) **DISPOSITIF DE FIXATION D'UN ELEMENT DE MANOEUVRE D'UN TABLIER DE VOLET ROULANT SUR UNE PAROI DE COFFRE DE CE VOLET ROULANT**
BEFESTIGUNGSVORRICHTUNG EINES BEWEGUNGSELEMENTS EINES ROLLLADENS AUF EINER WAND DES KASTEN DIESES ROLLLADENS
DEVICE FOR ATTACHING AN ELEMENT FOR CONTROLLING A ROLLER SHUTTER TO A WALL OF THE ROLLER SHUTTER BOX

(30) Priorité: 24.04.2017 FR 1753517
(43) Date de publication de la demande: 31.10.2018
(73) Titulaire: BUBENDORFF Société Anonyme, 68220 Attenschwiller (FR)
(72) Inventeur: DROUET, Sébastien, 68220 BUSCHWILLER (FR); BECHTOLD, Paul, 25420 BART (FR)
(74) Mandataire: Cabinet Bleger-Rhein-Poupon

(56) Documents cités:
- EP-A2- 0 569 743
- FR-A3- 2 730 002
- US-A- 2 070 005
- US-A1- 2009 087 279

## Description

La présente invention a trait à un ensemble comportant au moins une paroi d'un coffre d'un volet roulant ainsi qu'un dispositif de fixation d'un élément de manoeuvre d'un tablier d'un tel volet roulant sur une telle paroi.

La présente invention concerne le domaine du bâtiment et, plus particulièrement, celui de la fabrication des dispositifs d'occultation conçus pour fermer une ouverture que comporte une construction.

L'on connait, d'ores et déjà, de tels dispositifs d'occultation qui peuvent adopter la forme d'un volet roulant. Un tel volet roulant comporte un coffre, constitué par un assemblage d'une pluralité de parois, et à l'intérieur duquel est monté en rotation un arbre. Ce volet roulant comporte, encore, un tablier, usuellement constitué par un assemblage de lames juxtaposées, et raccordé audit arbre. Ce volet roulant comporte, également, un système d'entraînement dudit arbre pour, d'une part, replier le tablier autour dudit arbre et à l'intérieur du coffre et, d'autre part, déplier ledit tablier à partir dudit arbre et à l'extérieur du coffre. Ce système d'entraînement comporte un élément de manoeuvre usuellement constitué par un cardan (destiné à être raccordé à un organe de commande, notamment sous la forme d'une manivelle ou analogue), un embout (destiné à recevoir une tige en prise avec l'arbre), un système de transmission du mouvement entre le cardan et l'embout, et un boitier incorporant ce système de transmission et une partie du cardan et de l'embout. Cet élément de manoeuvre (plus particulièrement le boîtier de cet élément de manoeuvre) est fixé sur une paroi du coffre du volet roulant, notamment par l'intermédiaire de vis de fixation.

Une telle paroi de coffre de volet roulant peut être de type creux (paroi dite creuse) et comporter, alors, une peau interne (destinée à être orientée vers l'intérieur de la construction), une peau externe (destinée à être orientée vers l'extérieur de la construction), et des moyens d'entretoise pour entretoiser la peau interne et la peau externe.

La fixation de l'élément de manoeuvre sur une telle paroi creuse consiste, alors, à rapporter cet élément de manoeuvre sur cette paroi et à visser des vis de fixation au travers de ce boîtier et de cette paroi. Une telle fixation présente des inconvénients. En effet, les actionnements de l'organe de manoeuvre génèrent des efforts répétés sur l'élément de manoeuvre ainsi que sur les vis de fixation qui finissent par déchirer la paroi creuse du coffre. Le boîtier se déplace, alors, par rapport à cette paroi du coffre, ceci en dehors de sa position de service, voire se désolidarise de cette paroi. Il en résulte que la manoeuvre de l'arbre (et, donc, du tablier) n'est plus opérationnelle.

Par le document FR 2 730 002, on connait un ensemble comportant, d'une part, au moins une paroi d'un coffre d'un volet roulant, cette paroi comportant au moins une ouverture et, d'autre part, un dispositif de fixation d'un élément de manoeuvre d'un tablier de ce volet roulant sur une telle paroi. Ce dispositif de fixation comporte une platine comportant, d'une part, des moyens de maintien pour maintenir la platine en position par rapport à la paroi du coffre, ceci de manière temporaire et dans l'attente de la fixation définitive de l'élément de manoeuvre sur cette paroi de coffre. D'autre part, cette platine comporte au moins un moyen complémentaire de fixation, chacun configuré pour coopérer avec un moyen de fixation, ceci en vue de la fixation définitive de cet élément de manoeuvre sur la paroi de coffre.

La présente invention se veut de remédier aux inconvénients des dispositifs de fixation de l'état de la technique.

A cet effet, l'invention concerne un ensemble comportant, d'une part, au moins une paroi d'un coffre d'un volet roulant, cette paroi comportant au moins une ouverture et, d'autre part, un dispositif de fixation d'un élément de manoeuvre d'un tablier de ce volet roulant sur une telle paroi, ce dispositif de fixation adoptant la forme d'une platine comportant, d'une part, des moyens de maintien pour maintenir la platine en position par rapport à la paroi du coffre, ceci de manière temporaire et dans l'attente de la fixation définitive de l'élément de manoeuvre sur cette paroi de coffre et, d'autre part, au moins un moyen complémentaire de fixation, chacun configuré pour coopérer avec un moyen de fixation coopérant avec l'élément de manoeuvre, ceci en vue de la fixation définitive de cet élément de manoeuvre sur la paroi de coffre. Cet ensemble est caractérisé par le fait que les moyens de maintien, d'une part, coopèrent avec la bordure de l'ouverture de la paroi du coffre de volet roulant, ceci pour maintenir la platine en position par rapport à cette paroi du coffre et, d'autre part, comportent au moins un moyen d'accrochage pour accrocher la platine sur la paroi du coffre.

Encore une autre caractéristique concerne le fait que la platine comporte une plaque qui s'étend selon un plan et, d'autre part, ledit au moins un moyen d'accrochage s'étend latéralement par rapport à la plaque de la platine, à partir de cette plaque, d'un côté de la plaque, et selon une direction sensiblement parallèle au plan selon lequel s'étend la plaque de la platine.

De manière additionnelle, la plaque de la platine comporte une ouverture tandis que ledit au moins un moyen d'accrochage s'étend à partir du bord de l'ouverture de la plaque de la platine, ceci dans une direction opposée à celle de l'ouverture.

Selon une autre caractéristique, ledit au moins un moyen d'accrochage est accroché sur la bordure de l'ouverture de la paroi du coffre de volet roulant.

Une autre caractéristique concerne le fait que les moyens de maintien comportent au moins un moyen de limitation pour limiter le déplacement de la platine par rapport à la paroi du coffre.

Encore une autre caractéristique consiste en ce que la platine comporte une ouverture tandis que le moyen d'accrochage et le moyen de limitation sont positionnés de part et d'autre de ladite ouverture.

Une autre caractéristique concerne le fait que la platine comporte au moins une aile, d'une part, s'étendant selon un plan formant un angle non nul avec un plan général selon lequel s'étend la platine et, d'autre part, comportant le ou les moyens complémentaires de fixation.

Une caractéristique additionnelle consiste en ce que la platine comporte au moins une paire d'ailes comportant, chacune, deux ailes, d'une part, s'étendant chacune selon un plan formant un angle non nul avec un plan général selon lequel s'étend la platine, d'autre part, s'étendant de manière convergente et, d'autre part encore, comportant, chacune, un des moyens complémentaires de fixation.

Encore une autre caractéristique concerne le fait que la paroi du coffre comporte une peau interne, une peau externe, et au moins un moyen d'entretoise pour entretoiser la peau interne et la peau externe tandis que la platine du dispositif de fixation s'étend de part et d'autre d'au moins un moyen d'entretoise (de préférence d'une pluralité de moyens d'entretoise).

Ainsi, l'ensemble selon l'invention comporte un dispositif de fixation qui comporte une platine comportant des moyens de maintien pour maintenir la platine en position par rapport à la paroi du coffre. Ces moyens de maintien permettent, avantageusement, de pré-positionner ladite platine sur la paroi du coffre (notamment lors de la fabrication de cette paroi et en usine) et de maintenir cette platine dans cette position (notamment lors du stockage et du transport de cette paroi de coffre sur site ainsi que lors de son implantation au sein d'une construction), ceci dans l'attente de la fixation définitive de cette platine (et de l'élément de manoeuvre) sur la paroi du coffre. De plus, ces moyens de maintien permettent, avantageusement, de pré-positionner et de maintenir ladite platine sur la paroi du coffre, ceci dans une position appropriée et connue permettant, ultérieurement et lors de la fixation définitive de l'élément de manoeuvre sur cette paroi, de fixer cet élément de manoeuvre en aveugle, ceci par l'extérieur de ce coffre alors que la platine est située à l'intérieur de ce coffre et invisible de l'extérieur du coffre.

Une autre caractéristique concerne le fait que les moyens de maintien, d'une part, coopèrent avec la bordure de l'ouverture de la paroi du coffre de volet roulant, ceci pour maintenir la platine en position par rapport à cette paroi du coffre et, d'autre part, comportent au moins un moyen d'accrochage pour accrocher la platine sur la paroi du coffre, plus particulièrement sur ladite bordure de l'ouverture de la paroi du coffre de volet roulant. Avantageusement, de tels moyens de maintien permettent une mise en place rapide, facile et aisée de la platine (et, donc, du dispositif de fixation) sur la paroi du coffre et permettent de garantir un maintien de cette platine dans une position appropriée, ceci de manière temporaire et dans l'attente de la fixation définitive de l'élément de manoeuvre sur cette paroi de coffre.

Une autre caractéristique consiste en ce que le dispositif de fixation comporte une platine et que cette platine comporte au moins un moyen complémentaire de fixation, chacun configuré pour coopérer avec un moyen de fixation. Aussi, lors de la fixation de l'élément de manoeuvre sur la paroi du coffre à l'aide de ce ou ces moyens de fixation et de ce dispositif de fixation, la platine est serrée contre la paroi du coffre ce qui permet, avantageusement, de répartir les efforts sur une surface plus importante.

Une autre caractéristique consiste en ce que la platine comporte au moins un moyen de guidage pour guider le ou les moyens de fixation en direction du ou des moyens complémentaires de fixation. Ce ou ces moyens de guidage permettent, avantageusement et sous l'effet de l'actionnement d'un tel moyen de fixation, soit de positionner un tel moyen de fixation par rapport à un tel moyen complémentaire de fixation, soit (et de préférence) de positionner un tel moyen complémentaire de fixation (et, par conséquent, la platine) par rapport à un tel moyen de fixation, ceci en sorte qu'un tel moyen de fixation coopère de manière appropriée avec un tel moyen complémentaire de fixation que comporte la platine.

Encore une autre caractéristique consiste en ce que la platine comporte au moins une aile. Avantageusement, une telle aile est définie par une pièce unique qui, d'une part, constitue un moyen de guidage d'un moyen de fixation et, d'autre part, comporte un moyen complémentaire de fixation pour coopérer avec un tel moyen de fixation.

En fait, ladite platine comporte, de préférence, au moins une paire d'ailes convergentes, chaque aile d'une telle paire d'ailes, d'une part, constituant un moyen de guidage d'un moyen de fixation et, d'autre part, comportant un moyen complémentaire de fixation configuré pour coopérer avec un tel moyen de fixation. La présence des deux ailes d'une telle paire d'ailes permet, alors avantageusement, d'une part, de guider le moyen de fixation entre ces deux ailes et en direction des moyens complémentaires de fixation que comportent ces deux ailes et, donc, de centrer ce moyen de fixation par rapport à ces moyens complémentaires de fixation et, d'autre part, d'assurer une coopération entre un tel moyen de fixation et les moyens complémentaires de fixation que comportent ces deux ailes.

Une autre caractéristique concerne le fait que la paroi de coffre de volet roulant comporte une peau interne, une peau externe, et au moins un moyen d'entretoise pour entretoiser la peau interne et la peau externe. La platine du dispositif de fixation s'étend, alors, de part et d'autre d'au moins un tel moyen d'entretoise (de préférence d'une pluralité de moyens d'entretoise). Ceci permet, avantageusement, de répartir les efforts sur au moins un moyen d'entretoise (de préférence sur plusieurs moyens d'entretoise).

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue schématisée et en perspective d'une paroi de coffre de volet roulant, d'un élément de manoeuvre d'un tablier de volet roulant, et d'un dispositif de fixation de cet élément de manoeuvre sur cette paroi de coffre ;
- la figure 2 est une vue schématisée et de face du dispositif de fixation conforme à l'invention.

La présente invention concerne le domaine du bâtiment et, plus particulièrement, celui de la fabrication des dispositifs d'occultation conçus pour fermer une ouverture que comporte une construction.

Un tel dispositif d'occultation peut adopter la forme d'un volet roulant comportant un coffre, constitué par un assemblage d'une pluralité de parois, et à l'intérieur duquel est monté en rotation un arbre. Ce volet roulant comporte, encore, un tablier, usuellement constitué par un assemblage de lames juxtaposées, et raccordé audit arbre. Ce volet roulant comporte, également, un système d'entraînement dudit arbre pour, d'une part, replier le tablier autour dudit arbre et à l'intérieur du coffre et, d'autre part, déplier ledit tablier à partir dudit arbre et à l'extérieur du coffre. Ce système d'entraînement comporte un élément de manoeuvre, fixé sur une paroi du coffre du volet roulant, et conçu pour manoeuvrer le tablier du volet roulant.

L'invention concerne, alors, un dispositif de fixation 1 d'un tel élément de manoeuvre 2 de tablier de volet roulant sur une paroi 3 de coffre de ce volet roulant.

Ce dispositif de fixation 1 adopte la forme d'une platine 4, s'étendant selon un plan général, et notamment réalisée en un matériau métallique ou plastique.

Cette platine 4 comporte une plaque 5 s'étendant selon un plan.

Cette platine 4 comporte, encore, des moyens de maintien 6 pour maintenir la platine 4 en position par rapport à la paroi 3 du coffre, ceci de manière temporaire et dans l'attente de la fixation définitive de l'élément de manoeuvre 2 sur cette paroi 3 de coffre.

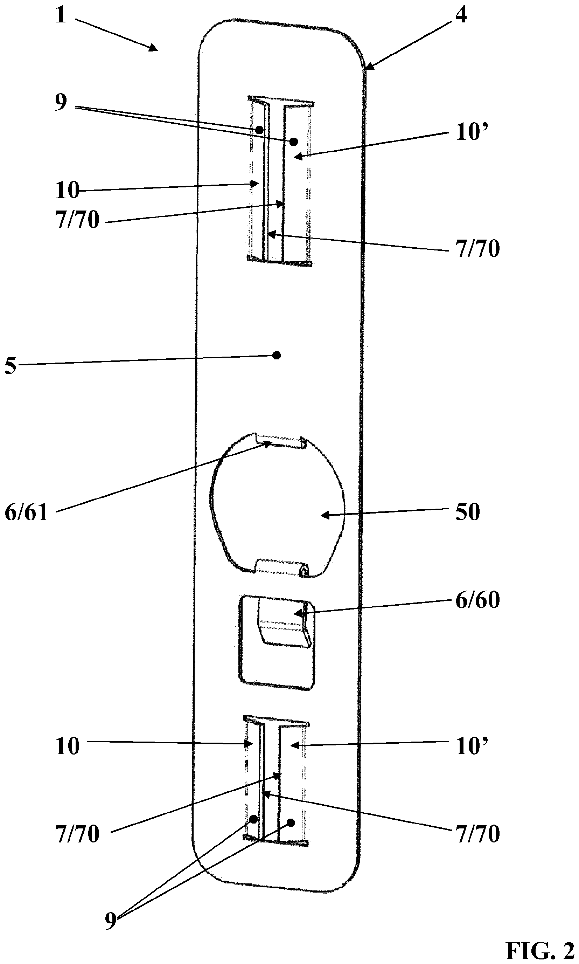

Tel que visible sur la figure 2, ces moyens de maintien 6 comportent au moins un moyen d'accrochage 60 pour accrocher la platine 4 sur la paroi 3 du coffre.

Un tel moyen d'accrochage 60 s'étend latéralement par rapport à la plaque 5 de la platine 4 et à partir de cette plaque 5, ceci d'un côté (plus particulièrement du côté postérieur destiné à être orienté en direction de la paroi 3 du coffre) de la plaque 5.

Un tel moyen d'accrochage 60 s'étend selon une direction parallèle au plan selon lequel s'étend la plaque 5 de la platine 4.

Selon un mode de réalisation préféré, un tel moyen d'accrochage 60 est constitué par un clip.

De manière additionnelle, les moyens de maintien 6 peuvent, encore, comporter au moins un moyen de limitation 61 pour limiter le déplacement de la platine 4 par rapport à la paroi 3 du coffre.

En fait, un tel moyen de limitation 61 est configuré pour limiter le déplacement de la platine 4 selon une direction parallèle au plan général selon lequel s'étend cette platine 4 et/ou selon une direction parallèle à un plan selon lequel s'étend la paroi 3 du coffre.

Un tel moyen de limitation 61 s'étend latéralement par rapport à la plaque 5 de la platine 4 et à partir de cette plaque 5, ceci d'un côté (plus particulièrement du côté postérieur destiné à être orienté en direction de la paroi 3 du coffre) de la plaque 5.

Un tel moyen de limitation 61 s'étend selon une direction sensiblement perpendiculaire au plan selon lequel s'étend la plaque 5 de la platine 4.

Selon un mode préféré de réalisation, un tel moyen de limitation 61 est constitué par une butée d'arrêt.

Une autre caractéristique consiste en ce que la plaque 5 de la platine 4 comporte une ouverture 50 (plus particulièrement traversante) tandis que le moyen d'accrochage 60 et le moyen de limitation 61 sont positionnés de part et d'autre de ladite ouverture 50.

En fait, ledit au moins un moyen d'accrochage 60, voire ledit au moins un moyen de limitation 61, s'étendent à partir du bord de l'ouverture 50 de la plaque 5 de la platine 4.

Ledit au moins un moyen d'accrochage 60 s'étend dans une direction opposée à celle de l'ouverture 50.

Selon un mode particulier de réalisation, les moyens de maintien 6 (plus particulièrement ledit au moins un moyen d'accrochage 60, voire encore ledit au moins un moyen de limitation 61) peuvent être constitués, soit par au moins une portion découpée et/ou déformée de la plaque 5 de la platine 4 (plus particulièrement lorsque cette platine 4 est réalisée en un matériau métallique), soit par au moins une portion moulée de la platine 4 (plus particulièrement lorsque cette platine 4 est réalisée en un matériau plastique).

Une autre caractéristique du dispositif de fixation 1 consiste en ce que la platine 4 comporte, encore, au moins un moyen complémentaire de fixation 7 chacun configuré pour coopérer avec un moyen de fixation 8 coopérant avec l'élément de manoeuvre 2, ceci en vue de la fixation définitive de cet élément de manoeuvre 2 sur la paroi 3 de coffre.

A ce propos, on observera que ce ou ces moyens complémentaires de fixation 7 comportent au moins un rebord d'accrochage 70 configuré pour coopérer avec un tel moyen de fixation 8, ceci en vue d'une telle fixation définitive.

En fait, un tel rebord d'accrochage 70 est configuré pour coopérer avec le filetage d'une vis constituant un tel moyen de fixation 8. Un tel rebord d'accrochage 70 fait, alors, office d'au moins une partie d'un écrou.

Selon un mode particulier de réalisation, le ou les moyens complémentaires de fixation 7 (plus particulièrement le ou les rebords d'accrochage 70 de ce ou ces moyens complémentaires de fixation 7) peuvent être constitués, soit par au moins une portion découpée et/ou déformée de la plaque 5 de la platine 4 (plus particulièrement lorsque cette platine 4 est réalisée en un matériau métallique), soit par au moins une portion moulée de la platine 4 (plus particulièrement lorsque cette platine 4 est réalisée en un matériau plastique).

Une autre caractéristique du dispositif de fixation 1 consiste en ce que la platine 4 comporte au moins un moyen de guidage 9 pour guider le ou les moyens de fixation 8 en direction du ou des moyens complémentaires de fixation 7.

En fait, un tel moyen de guidage 9 est configuré pour guider ce ou ces moyens de fixation 8, ceci sous l'effet de l'actionnement de ce ou ces moyens de fixation 8, plus particulièrement sous l'effet d'une commande en rotation d'une vis constituant un tel moyen de fixation 8.

Encore une autre caractéristique du dispositif de fixation 1 consiste en ce que la platine 4 comporte au moins une aile (10 ; 10'), d'une part, s'étendant selon un plan formant un angle non nul avec le plan général selon lequel s'étend cette platine 4 et, d'autre part, comportant le ou les moyens complémentaires de fixation 7.

En fait, cette ou ces ailes (10 ; 10') s'étendent à partir de la plaque 5 que comporte la platine 4, ceci selon un plan formant un angle non nul avec le plan selon lequel s'étend cette plaque 5.

Tel que visible sur la figure 2, cette ou ces ailes (10 ; 10') s'étendent d'un côté de la plaque 5 de la platine 4, plus particulièrement du côté antérieur de la plaque 5 destiné à être orienté dans une direction opposée à la paroi 3 du coffre.

Une autre caractéristique consiste en ce que la ou les ailes (10 ; 10') comportent, chacune, une extrémité libre qui comporte le rebord d'accrochage 70 du moyen complémentaire de fixation 7 ou de l'un des moyens complémentaires de fixation 7.

Encore une autre caractéristique consiste en ce que cette ou ces ailes (10 ; 10') constituent le ou les moyens de guidage 9 du moyen de fixation 8.

Une caractéristique additionnelle consiste en ce qu'une telle aile (10 ; 10') est constituée par au moins une portion découpée et/ou déformée de la plaque 5 de la platine 4, ceci dans le cas d'une platine 4 réalisée en un matériau métallique. Dans le cas d'une platine 4 réalisée en un matériau plastique, une telle aile (10 ; 10') peut être réalisée par au moins une portion moulée de cette platine 4.

Selon un mode de réalisation préféré, la platine 4 comporte au moins une paire d'ailes (10 ; 10') comportant, chacune, deux ailes (10 ; 10'), d'une part, s'étendant chacune selon un plan formant un angle non nul avec le plan général selon lequel s'étend la platine 4, d'autre part, s'étendant de manière convergente et, d'autre part encore, comportant, chacune, un des moyens complémentaires de fixation 7.

En fait, ces deux ailes (10 ; 10') d'une telle paire d'ailes (10 ; 10') s'étendent chacune selon un plan formant un angle non nul avec le plan selon lequel s'étend la plaque 5 que comporte la platine 4.

On observera que le plan selon lequel s'étend l'une 10 des deux ailes (10 ; 10') d'une telle paire d'ailes (10 ; 10') forme un angle aigu avec le plan selon lequel s'étend l'autre 10' de ces deux ailes (10 ; 10') de cette paire d'ailes (10 ; 10').

Une autre caractéristique consiste en ce que les ailes (10 ; 10') d'une telle paire d'ailes (10 ; 10') sont symétriques par rapport à un plan sensiblement perpendiculaire au plan général selon lequel s'étend la platine 4 ou au plan selon lequel s'étend la plaque 5 de cette platine 4.

En fait, les deux ailes (10 ; 10') d'une telle paire d'ailes (10 ; 10') s'étendent à partir de la plaque 5 de la platine 4 et en direction de leurs extrémités libres, ceci en convergeant.

Chaque aile (10 ; 10') d'une telle paire d'ailes (10 ; 10') comporte, alors, une extrémité libre comportant le rebord d'accrochage 70 de l'un des moyens complémentaires de fixation 7. Les rebords d'accrochage 70 des deux ailes (10 ; 10') d'une telle paire d'ailes (10 ; 10') font, alors, office d'écrou coopérant avec un moyen de fixation 8.

Une autre caractéristique des ailes (10 ; 10') d'une telle paire d'ailes (10 ; 10') consiste en ce qu'elles constituent les moyens de guidage 9 d'un tel moyen de fixation 8. Plus particulièrement, les ailes (10 ; 10') d'une telle paire d'ailes (10 ; 10') permettent, sous l'effet de leur convergence et de l'actionnement d'un tel moyen de fixation 8, de centrer ce moyen de fixation 8 entre les ailes (10 ; 10') d'une telle paire d'ailes (10 ; 10') et, ainsi, entre les rebords d'accrochage 70 des moyens complémentaires de fixation 7 que comportent ces ailes (10 ; 10').

Selon un mode préféré de réalisation, le dispositif de fixation 1 comporte au moins deux paires d'ailes (10 ; 10'). Les deux ailes (10 ; 10') de chacune de ces paires d'ailes (10 ; 10') présentent, alors, les caractéristiques décrites ci-dessus. Tel que visible sur les figures en annexe, les deux paires d'ailes (10 ; 10') sont situées de part et d'autre de l'ouverture 50 que comporte la plaque 5, notamment de manière symétrique par rapport à cette ouverture 50.

L'invention concerne, également, un système de fixation d'un élément de manoeuvre 2 d'un tablier d'un volet roulant sur une paroi 3 d'un coffre de ce volet roulant.

Ce système de fixation comporte, alors, d'une part, un dispositif de fixation 1 présentant les caractéristiques décrites ci-dessus et, d'autre part, au moins un moyen de fixation 8 pour fixer l'élément de manoeuvre 2 sur ladite paroi 3 de coffre, un tel moyen de fixation 8 étant configuré pour coopérer avec ledit au moins un moyen complémentaire de fixation 7 du dispositif de fixation 1 ainsi qu'avec ledit élément de manoeuvre 2.

Selon un mode préféré de réalisation, ce système comporte deux moyens de fixation 8 ainsi que deux paires de moyens complémentaires de fixation 7. Ce système comporte, alors, également, deux paires d'ailes (10 ; 10') dans lesquelles chaque aile (10 ; 10') comporte l'un de ces moyens complémentaires de fixation 7.

L'invention concerne, aussi, un ensemble comportant, d'une part, au moins une paroi 3 d'un coffre d'un volet roulant et, d'autre part, un dispositif de fixation 1 d'un élément de manoeuvre 2 d'un tablier de ce volet roulant sur une telle paroi 3.

Cet ensemble est, plus particulièrement, de type préfabriqué, c'est-à-dire fabriqué en usine, ceci avant d'être stocké, transporté sur un chantier, et implanté au sein d'une construction.

Dans cet ensemble, le dispositif de fixation 1 présente les caractéristiques décrites ci-dessus.

En ce qui concerne la paroi 3 du coffre, celle-ci comporte au moins une ouverture (30 ; 30') tandis que les moyens de maintien 6 du dispositif de fixation 1 coopèrent avec une telle ouverture (30 ; 30'), plus particulièrement avec la bordure d'une telle ouverture (30 ; 30'), ceci pour maintenir la platine 4 en position par rapport à cette paroi 3 du coffre.

Tel que mentionné ci-dessus, les moyens de maintien 6 comportent au moins un moyen d'accrochage 60 pour accrocher la platine 4 sur la paroi 3 du coffre.

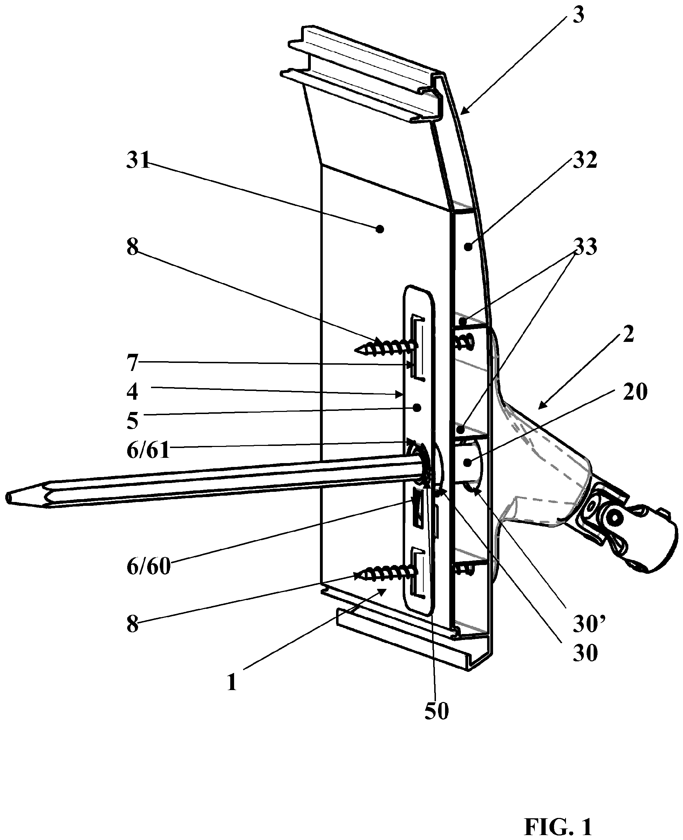

En fait et tel que visible sur la figure 1, ledit au moins un moyen d'accrochage 60 est, alors, accroché sur la bordure de l'ouverture (30 ; 30') de la paroi 3 du coffre de volet roulant.

Ledit au moins un moyen d'accrochage 60 est constitué par un clip qui est, alors, clipé sur la bordure d'une telle ouverture (30 ; 30').

En fait, la plaque 5 de la platine 4 du dispositif de fixation 1 s'étend d'un côté de la paroi 3 de coffre tandis que ledit au moins un moyen d'accrochage 60 s'étend au moins en partie de l'autre côté de cette paroi 3.

Tel que mentionné ci-dessus, les moyens de maintien 6 comportent, également, au moins un moyen de limitation 61 pour limiter le déplacement de la platine 4 par rapport à la paroi 3 du coffre. Un tel moyen de limitation 61 coopère, alors, également, avec la bordure d'une telle ouverture (30 ; 30'), plus particulièrement avec le bord de cette bordure orienté vers l'intérieur de l'ouverture (30 ; 30'), ceci en prenant appui sur ce bord.

Encore une autre caractéristique de la paroi 3 de coffre consiste en ce qu'elle est constituée par une paroi dit creuse. Une telle paroi creuse 3 comporte au moins une peau interne 31 (destinée à être orientée en direction de l'intérieur du coffre), au moins une peau externe 32 (destinée à être orientée en direction de l'extérieur du coffre), et au moins un moyen d'entretoise 33 pour entretoiser la peau interne 31 et la peau externe 32. De manière additionnelle, une telle paroi 3 de coffre peut, encore, comporter au moins une cloison intermédiaire, interposée entre une telle peau interne 31 et une telle peau externe 32, sensiblement parallèle à une telle peau interne 31 et/ou une telle peau externe 32, ceci pour constituer une paroi à double ou à triple chambre.

A ce propos, on observera que la platine 4 du dispositif de fixation 1 (plus particulièrement la plaque 5 de cette platine 4) s'étend de part et d'autre d'au moins un tel moyen d'entretoise 33, de préférence de part et d'autre d'une pluralité de ces moyens d'entretoise 33. Ceci permet, avantageusement, de répartir les efforts, exercés par les moyens de fixation 8 sur ladite platine 4 (plus particulièrement sur la plaque 5 de cette platine 4), sur une pluralité de moyens d'entretoise 33.

Tel que mentionné ci-dessus, la paroi 3 du coffre comporte au moins une ouverture (30 ; 30'). En fait, dans cette paroi 3 de coffre, la peau interne 31 et la peau externe 32 (voire encore au moins une cloison intermédiaire) comportent, chacune, une ouverture (30 ; 30') comme visible figure 1. Ces ouvertures (30 ; 30') sont alignées, ceci en sorte que l'ouverture 30 de la peau interne 31 est alignée avec l'ouverture 30' de la peau externe 32.

C'est, plus particulièrement, avec l'ouverture 30 (notamment avec la bordure de cette ouverture 30) de la peau interne 31 que coopèrent les moyens de maintien 6 que comporte le dispositif de fixation 1.

En fait, ledit au moins un moyen d'accrochage 60 (que comportent de tels moyens de maintien 6) coopère avec la bordure de l'ouverture 30 de la peau interne 31 de la paroi 3 du coffre de volet roulant, plus particulièrement en étant accroché sur cette bordure de l'ouverture 30 de cette peau interne 31 de la paroi 3 du coffre de volet roulant.

La plaque 5 de la platine 4 du dispositif de fixation 1 s'étend d'un côté de la peau interne 31 de la paroi 3 tandis que ledit au moins un moyen d'accrochage 60 s'étend de l'autre côté de cette peau interne 31 de cette paroi 3.

Ledit au moins un moyen de limitation 61 coopère, alors, également, avec la bordure de l'ouverture 30 de cette peau interne 31 (plus particulièrement avec le bord de cette bordure orienté vers l'intérieur de cette ouverture 30), ceci en prenant appui sur ce bord.

Ces ouvertures (30 ; 30') sont destinées à être traversées par une partie de l'élément de manoeuvre 2, plus particulièrement par un embout 20, que comporte cet élément de manoeuvre 2, et qui est destiné à recevoir une tige en prise avec l'arbre du volet roulant.

A ce propos, on observera que l'ouverture 50, que comporte la plaque 5 de la platine 4 du dispositif de fixation 1, est configurée pour être traversée par ledit embout 20 de l'élément de manoeuvre 2.

## Revendications

1. Ensemble comportant, d'une part, au moins une paroi (3) d'un coffre d'un volet roulant, cette paroi (3) comportant au moins une ouverture (30 ; 30') et, d'autre part, un dispositif de fixation (1) d'un élément de manoeuvre (2) d'un tablier de ce volet roulant sur une telle paroi (3), ce dispositif de fixation (1) adoptant la forme d'une platine (4) comportant, d'une part, des moyens de maintien (6) pour maintenir la platine (4) en position par rapport à la paroi (3) du coffre, ceci de manière temporaire et dans l'attente de la fixation définitive de l'élément de manoeuvre (2) sur cette paroi (3) de coffre et, d'autre part, au moins un moyen complémentaire de fixation (7), chacun configuré pour coopérer avec un moyen de fixation (8) coopérant avec l'élément de manoeuvre (2), ceci en vue de la fixation définitive de cet élément de manoeuvre (2) sur la paroi (3) de coffre, **caractérisé par le fait que** les moyens de maintien (6), d'une part, coopèrent avec la bordure de l'ouverture (30 ; 30') de la paroi (3) du coffre de volet roulant, ceci pour maintenir la platine (4) en position par rapport à cette paroi (3) du coffre et, d'autre part, comportent au moins un moyen d'accrochage (60) pour accrocher la platine (4) sur la paroi (3) du coffre.

2. Ensemble selon l'une quelconque des revendications précédentes, **caractérisé par le fait que**, d'une part, la platine (4) comporte une plaque (5) qui s'étend selon un plan et, d'autre part, ledit au moins un moyen d'accrochage (60) s'étend latéralement par rapport à la plaque (5) de la platine (4), à partir de cette plaque (5), d'un côté de la plaque (5), et selon une direction parallèle au plan selon lequel s'étend la plaque (5) de la platine (4).

3. Ensemble selon l'une quelconque des revendications précédentes, **caractérisé par le fait que** la plaque (5) de la platine (4) comporte une ouverture (50) tandis que ledit au moins un moyen d'accrochage (60) s'étend à partir du bord de l'ouverture (50) de la plaque (5) de la platine (4), ceci dans une direction opposée à celle de l'ouverture (50).

4. Ensemble selon l'une quelconque des revendications précédentes, **caractérisé par le fait que** ledit au moins moyen d'accrochage (60) est constitué par un clip.

5. Ensemble selon l'une quelconque des revendications précédentes, **caractérisé par le fait que** ledit au moins un moyen d'accrochage (60) est accroché sur la bordure de l'ouverture (30 ; 30') de la paroi (3) du coffre de volet roulant.

6. Ensemble selon l'une quelconque des revendications précédentes, **caractérisé par le fait que** les moyens de maintien (6) comportent au moins un moyen de limitation (61) pour limiter le déplacement de la platine (4) par rapport à la paroi (3) du coffre.

7. Ensemble selon la revendication 6, **caractérisé par le fait que** la platine (4) comporte une ouverture (50) tandis que le moyen d'accrochage (60) et le moyen de limitation (61) sont positionnés de part et d'autre de ladite ouverture (50).

8. Ensemble selon l'une quelconque des revendications précédentes, **caractérisé par le fait que** le ou les moyens complémentaires de fixation (7) comportent au moins un rebord d'accrochage (70) configuré pour coopérer avec le moyen de fixation (8).

9. Ensemble selon l'une quelconque des revendications précédentes, **caractérisé par le fait que** la platine (4) comporte au moins un moyen de guidage (9) pour guider le ou les moyens de fixation (8) en direction du ou des moyens complémentaires de fixation (7).

10. Ensemble selon l'une quelconque des revendications précédentes, **caractérisé par le fait que** la platine (4) comporte au moins une aile (10 ; 10'), d'une part, s'étendant selon un plan formant un angle non nul avec un plan général selon lequel s'étend la platine (4) et, d'autre part, comportant le ou les moyens complémentaires de fixation (7).

11. Ensemble selon les revendications 8 et 10, **caractérisé par le fait que** la ou les ailes (10 ; 10') comportent, chacune, une extrémité libre qui comporte le rebord d'accrochage (70) du moyen complémentaire de fixation (7) ou de l'un des moyens complémentaires de fixation (7).

12. Ensemble selon les revendications 9 et 10, **caractérisé par le fait que** la ou les ailes (10 ; 10') constituent le ou les moyens de guidage (9) du moyen de fixation (8) .

13. Ensemble selon l'une quelconque des revendications précédentes, **caractérisé par le fait que** la platine (4) comporte au moins une paire d'ailes (10 ; 10') comportant, chacune, deux ailes (10 ; 10'), d'une part, s'étendant chacune selon un plan formant un angle non nul avec un plan général selon lequel s'étend la platine (4), d'autre part, s'étendant de manière convergente et, d'autre part encore, comportant, chacune, un des moyens complémentaires de fixation (7).

14. Ensemble selon l'une quelconque des revendications précédentes, **caractérisé par le fait que** la platine (4) comporte une plaque (5) tandis que lesdits moyens de maintien (6) et/ou ledit au moins un moyen complémentaire de fixation (7) sont constitués, soit par au moins une portion découpée et/ou déformée de la plaque (5) de la platine (4), soit par au moins une portion moulée de cette platine (4).

15. Ensemble selon l'une quelconque des revendications précédente, **caractérisé par le fait que** la paroi (3) du coffre comporte une peau interne (31), une peau externe (32), et au moins un moyen d'entretoise (33) pour entretoiser la peau interne (31) et la peau externe (32) tandis que la platine (4) du dispositif de fixation (1) s'étend de part et d'autre d'au moins un tel moyen d'entretoise (33).

## Patentansprüche

1. Einheit, umfassend zum einen mindestens eine Wand (3) eines Kastens eines Rollladens, wobei diese Wand (3) mindestens eine Öffnung (30; 30') aufweist, und zum anderen eine Befestigungsvorrichtung (1) eines Bewegungselements (2) eines Vorhangs dieses Rollladens auf einer derartigen Wand (3), wobei diese Befestigungsvorrichtung (1) die Form einer Platte (4) annimmt, aufweisend, zum einen, Haltemittel (6), um die Platte (4) in Bezug auf die Wand (3) des Kastens in Position zu halten, dies temporär und in Erwartung der endgültigen Befestigung des Bewegungselements (2) auf dieser Kastenwand (3), und, zum anderen, mindestens ein komplementäres Befestigungsmittel (7), die jeweils konfiguriert sind, um mit einem Befestigungsmittel (8) zusammenzuwirken, das mit dem Bewegungselement (2) zusammenwirkt, dies im Hinblick auf die endgültige Befestigung dieses Bewegungselements (2) auf der Kastenwand (3), **dadurch gekennzeichnet, dass** die Haltemittel (6) zum einen mit der Kante der Öffnung (30; 30') der Wand (3) des Rollladenkastens zusammenwirken, dies, um die Platte (4) in Bezug auf diese Wand (3) des Kastens in Position zu halten, und zum anderen mindestens ein Hakenmittel (60) aufweisen, um die Platte (4) auf der Wand (3) des Kastens einzuhaken.

2. Einheit nach einem der vorangehenden Ansprüche, **dadurch gekennzeichnet, dass** zum einen die Platte (4) eine Tafel (5) aufweist, die sich gemäß einer Ebene erstreckt, und zum anderen sich das mindestens eine Hakenmittel (60) seitlich in Bezug auf die Tafel (5) der Platte (4) erstreckt, ab dieser Tafel (5), auf einer Seite der Tafel (5), und gemäß einer Richtung, die gemäß der Ebene, in welcher sich die Tafel (5) der Platte (4) erstreckt, parallel ist.

3. Einheit nach einem der vorangehenden Ansprüche, **dadurch gekennzeichnet, dass** die Tafel (5) der Platte (4) eine Öffnung (50) aufweist, wogegen sich das mindestens eine Hakenmittel (60) ab dem Rand der Öffnung (50) der Tafel (5) der Platte (4) erstreckt, dies in einer Richtung, die zu der der Öffnung (50) entgegengesetzt ist.

4. Einheit nach einem der vorangehenden Ansprüche, **dadurch gekennzeichnet, dass** das mindestens eine Hakenmittel (60) aus einem Clip besteht.

5. Einheit nach einem der vorangehenden Ansprüche, **dadurch gekennzeichnet, dass** das mindestens eine Hakenmittel (60) auf der Kante der Öffnung (30; 30') der Wand (3) des Rollladenkastens eingehakt ist.

6. Einheit nach einem der vorangehenden Ansprüche, **dadurch gekennzeichnet, dass** die Haltemittel (6) mindestens ein Begrenzungsmittel (61) aufweisen, um die Verlagerung der Platte (4) in Bezug auf die Wand (3) des Kastens zu begrenzen.

7. Einheit nach Anspruch 6, **dadurch gekennzeichnet, dass** die Platte (4) eine Öffnung (50) aufweist, wogegen das Hakenmittel (60) und das Begrenzungsmittel (61) auf der einen und der anderen Seite der Öffnung (50) positioniert sind.

8. Einheit nach einem der vorangehenden Ansprüche, **dadurch gekennzeichnet, dass** das oder die komplementären Befestigungsmittel (7) mindestens ein Hakensims (70) aufweisen, das konfiguriert ist, um mit dem Befestigungsmittel (8) zusammenzuwirken.

9. Einheit nach einem der vorangehenden Ansprüche, **dadurch gekennzeichnet, dass** die Platte (4) mindestens ein Führungsmittel (9) aufweist, um das oder die Befestigungsmittel (8) in Richtung des oder der komplementären Befestigungsmittel (7) zu führen.

10. Einheit nach einem der vorangehenden Ansprüche, **dadurch gekennzeichnet, dass** die Platte (4) mindestens einen Flügel (10; 10') aufweist, zum einen, der sich gemäß einer Ebene, die mit einer allgemeinen Ebene, in welcher sich die Platte (4) erstreckt, einen Winkel von nicht Null bildet, und, zum anderen, das oder die komplementären Befestigungsmittel (7) aufweist.

11. Einheit nach den Ansprüchen 8 und 10, **dadurch gekennzeichnet, dass** der oder die Flügel (10; 10') jeweils ein freies Ende aufweisen, welches das Hakensims (70) des komplementären Befestigungsmittels (7) oder von einem der komplementären Befestigungsmittel (7) aufweist.

12. Einheit nach den Ansprüchen 9 und 10, **dadurch gekennzeichnet, dass** der oder die Flügel (10; 10') das oder die Führungsmittel (9) des Befestigungsmittels (8) darstellen.

13. Einheit nach einem der vorangehenden Ansprüche, **dadurch gekennzeichnet, dass** die Platte (4) mindestens ein Paar Flügel (10; 10') aufweist, das jeweils zwei Flügel (10; 10') aufweist, die sich zum einen gemäß einer Ebene erstrecken, die einen Winkel von nicht Null mit einer allgemeinen Ebene bilden, in welcher sich die Platte (4) erstreckt, die sich zum anderen konvergent erstrecken und weiterhin zum anderen jeweils eines der komplementären Befestigungsmittel (7) aufweisen.

14. Einheit nach einem der vorangehenden Ansprüche, **dadurch gekennzeichnet, dass** die Platte (4) eine Tafel (5) aufweist, wogegen die Haltemittel (6) und/oder das mindestens eine komplementäre Befestigungsmittel (7) entweder von mindestens einem ausgeschnittenen und/oder verformten Abschnitt der Tafel (5) der Platte (4) oder von mindestens einem geformten Abschnitt dieser Platte (4) gebildet sind.

15. Einheit nach einem der vorangehenden Ansprüche, **dadurch gekennzeichnet, dass** die Wand (3) des Kastens eine innere Haut (31), eine äußere Haut (32) und mindestens ein Strebenmittel (33) aufweist, um die innere Haut (31) und die äußere Haut (32) zu verstreben, wogegen sich die Platte (4) der Befestigungsvorrichtung (1) auf der einen und der anderen Seite von mindestens einem derartigen Strebenmittel (33) erstreckt.

## Claims

1. An assembly including, on the one hand, at least one wall (3) of a box of a roller shutter, this wall (3) including at least one opening (30; 30') and, on the other hand, a fastening device (1) of a maneuvering element (2) of an apron of this roller shutter on such a wall (3), this fastening device (1) adopting the form of a platen (4) including, on the one hand, maintaining means (6) for keeping the platen (4) in position relative to the wall (3) of the box, temporarily and while waiting for the permanent fastening of the maneuvering element (2) on this box wall (3) and, on the other hand, at least one complementary fastening means (7), each configured to cooperate with the fastening means (8) cooperating with the maneuvering element (2), with a view to the permanent fastening of this maneuvering element (2) on the box wall (3), **characterized in that** the maintaining means (6) on the one hand cooperate with the border of the opening (30; 30') of the wall (3) of the roller shutter box, in order to keep the platen (4) in position relative to this wall (3) of the box and, on the other hand, include at least one hooking means (60) to hook the platen (4) on the wall (3) of the box.

2. The assembly according to any one of the preceding claims, **characterized in that**, on the one hand, the platen (4) includes a plate (5) that extends in a plane and, on the other hand, said at least one hooking means (60) extends laterally relative to the plate (5) of the platen (4), from this plate (5), on one side of the plate (5), and in a direction parallel to the plane in which the plate (5) of the platen (4) extends.

3. The assembly according to any one of the preceding claims, **characterized in that** the plate (5) of the platen (4) includes an opening (50) while said at least one hooking means (60) extends from the edge of the opening (50) of the plate (5) of the platen (4), in a direction opposite that of the opening (50).

4. The assembly according to any one of the preceding claims, **characterized in that** said at least one hooking means (60) is made up of a clip.

5. The assembly according to any one of the preceding claims, **characterized in that** said at least one hooking means (60) is hooked on the border of the opening (30; 30') of the wall (3) of the roller shutter box.

6. The assembly according to any one of the preceding claims, **characterized in that** the maintaining means (6) include at least one limiting means (61) to limit the movement of the platen (4) relative to the wall (3) of the box.

7. The assembly according to claim 6, **characterized in that** the platen (4) includes an opening (50) while the hooking means (60) and the limiting means (61) are positioned on either side of said opening (50).

8. The assembly according to any one of the preceding claims, **characterized in that** the complementary fastening means (7) include(s) at least one hooking rim (70) configured to cooperate with the fastening means (8).

9. The assembly according to any one of the preceding claims, **characterized in that** the platen (4) includes at least one guide means (9) for guiding the fastening means (8) toward the complementary fastening means (7).

10. The assembly according to any one of the preceding claims, **characterized in that** the platen (4) includes at least one wing (10; 10'), on the one hand, extending in a plane forming a non-nil angle with a general plane in which the platen (4) extends and, on the other hand, including the complementary fastening means (7).

11. The assembly according to claims 8 and 10, **characterized in that** the wing(s) (10; 10') each include a free end includes the hooking rim (70) of the complementary fastening means (7) or of one of the complementary fastening means (7).

12. The assembly according to claims 9 and 10, **characterized in that** the wing(s) (10; 10') make up the guide means (9) of the fastening means (8).

13. The assembly according to any one of the preceding claims, **characterized in that** the platen (4) includes at least one pair of wings (10; 10') each including two wings (10; 10'), on the one hand, each extending in a plane forming a non-nil angle with a general plane in which the platen (4) extends, on the other hand, extending in a convergent manner and, furthermore, each including one of the complementary fastening means (7).

14. The assembly according to one of the preceding claims, **characterized in that** the platen (4) includes a plate (5) while said maintaining means (6) and/or said at least one complementary fastening means (7) are made up either of at least one cut and/or deformed portion of the plate (5) of the platen (4), or of at least one molded portion of said platen (4).

15. The assembly according to any one of the preceding claims, **characterized in that** the wall (3) of the box includes an inner skin (31), an outer skin (32), and at least one spacer means (33) for spacing the inner skin (31) apart from the outer skin (32) while the platen (4) of the fastening device (1) extends on either side of at least one spacer means (33).
